# EUROPEAN PATENT APPLICATION

(11) **EP 4 676 142 A1**
(43) Date of publication of application: **07.01.2026**
(21) Application number: 24763841.4
(22) Date of filing: 26.02.2024
(51) Int. Cl.: H04W 72/115, H04W 16/28, H04W 72/1268, H04W 72/232

(54) **TERMINAL, WIRELESS COMMUNICATION METHOD, AND BASE STATION**

(30) Priority: 27.02.2023 JP 2023028510
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2024/006831
(87) International publication number: WO 2024/181361

(57) **Abstract**

To appropriately control UL transmission using more than four antenna ports. A terminal according to an aspect of the present disclosure includes a receiving section that receives configuration information for a configured grant transmission regarding a rank larger than 4, and a transmitting section that performs the configured grant transmission, based on the configuration information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Rel-15 NR supports up to four layers uplink (UL) Multi Input Multi Output (MIMO) transmission. For future NR, a study is underway to support more than four layers UL transmission in order to realize higher spectra efficiency. For example, for Rel. 18 NR, maximum 6-rank transmission using six antenna port, maximum 6- or 8-rank transmission using eight antenna ports, and the like are under study.

However, a study is insufficient for configured grant-based transmission with the rank larger than 4. Unless this is not appropriated controlled, a communication throughput increase may be suppressed, or a radio resource use efficiency may be decreased.

Thus, the present disclosure has an object to provide a terminal, a radio communication method, and a base station capable of appropriately controlling UL transmission using more than four antenna ports.

### Solution to Problem

A terminal according to an aspect of the present disclosure includes a receiving section that receives configuration information for a configured grant transmission regarding a rank larger than 4, and a transmitting section that performs the configured grant transmission, based on the configuration information.

### Advantageous Effects of Invention

According to an aspect of the present disclosure, UL transmission using more than four antenna ports can be appropriately controlled.

### Brief Description of Drawings

[FIG. 1] FIGS. 1A to 1D are diagrams to show examples of special fields for validation of type 2 CG activation/deactivation DCI in Rel-17 NR.
[FIG. 2] FIG. 2 is a diagram to show an example of CG configuration information according to a second embodiment.
[FIG. 3] FIGS. 3A and 3B are diagrams to show examples of CG-UCI according to a third embodiment.
[FIG. 4] FIG. 4 is a diagram to show an example of a schematic structure of a radio communication system according to one embodiment.
[FIG. 5] FIG. 5 is a diagram to show an example of a structure of a base station according to one embodiment.
[FIG. 6] FIG. 6 is a diagram to show an example of a structure of a user terminal according to one embodiment.
[FIG. 7] FIG. 7 is a diagram to show an example of a hardware structure of the base station and the user terminal according to one embodiment.
[FIG. 8] FIG. 8 is a diagram to show an example of a vehicle according to one embodiment.

### Description of Embodiments

### (Dynamic Grant Based Transmission and Configured Grant Based Transmission)

For NR UL transmission, there are a dynamic grant-based transmission and a configured grant-based transmission.

The dynamic grant-based transmission is a UL transmission using an uplink shared channel (for example, Physical Uplink Shared Channel (PUSCH)) in which resource assignment is dynamically indicated to a terminal (user terminal, User Equipment (UE)) via downlink control information (DCI) (UL grant).

The configured grant-based transmission is a UL transmission using an uplink shared channel (for example, PUSCH) in which resource assignment is semi-statically indicated to the UE through higher layer signaling.

The dynamic grant-based transmission may be referred to as dynamic grant-based PUSCH (DG PUSCH), UL transmission with dynamic grant, PUSCH with dynamic grant, UL transmission with UL grant, UL grant-based transmission, UL transmission scheduled (configured with transmission resource) via dynamic grant, or the like.

The configured grant-based transmission may be referred to as configured grant-based PUSCH (CG PUSCH), UL transmission with configured grant, PUSCH with configured grant, UL transmission without UL grant, UL grant-free transmission, UL transmission scheduled (configured with transmission resource) via configured grant, UL semi-persistent scheduling (SPS) transmission, or the like.

In the present disclosure, the configured grant (CG) and the SPS may be interchangeably interpreted.

Note that, each of the DG and the CG may be referred to as an actual UL grant. That is, the actual UL grant may be higher layer signaling (for example, radio resource control (RRC) signaling), physical layer signaling (for example, activation DCI described later), or a combination of these.

There are some types (type 1, type 2, and the like ) of configured grant-based transmissions.

In the CG type 1 transmission (configured grant type 1 transmission, type 1 CG), CG configuration information (which may be referred to as a parameter used for the CG transmission, a CG parameter) is configured for the UE using only the higher layer signaling.

The UE is configured with some of the CG parameters through the higher layer signaling in the CG type 2 transmission (configured grant type 2 transmission, type 2 CG). The UE may be notified of some other of the CG parameters through physical layer signaling (for example, the activation DCI described later) in the CG type 2 transmission.

The UE. when being configured with the type 1 CG, may determine that one or more CGs are triggered. The UE may perform PUSCH transmission without the dynamic grant using a resource for the configured CG PUSCH transmission (which may be referred to as CG resource, transmission occasion, or the like). Note that even when the CG PUSCH transmission is configured, if there is no data in a transmission buffer, the UE may skip the CG PUSCH transmission.

The UE, when being configured with the type 2 CG and notified of a signal for activation, may determine that one or more CGs are triggered (or activated). The signal for the activation (for example, activation DCI) may be DCI (PDCCH) having a cyclic redundancy check (CRC) scrambled by a certain identifier (for example, Configured Scheduling Radio Network Temporary Identifier (CS-RNTI)). Note that a signal for deactivation of the CG (for example, deactivation DCI) may be DCI the same as or similar to the activation DCI. Note that the deactivation may be interchangeably interpreted as release.

The UE may determine whether to perform the PUSCH transmission using the CG resource configured through the higher layer based on the signal for the activation described above. The UE may release (or deactivate) a resource (PUSCH) corresponding to the CG based on the signal for the deactivation describe above or a certain timer expiration (certain period of time elapse).

The UE may perform the PUSCH transmission without the dynamic grant using a resource for the activated CG PUSCH transmission (which may be referred to as CG resource, transmission occasion, or the like). Note that even when the CG PUSCH transmission is activated (in an active state), if there is no data in the transmission buffer, the UE may skip the CG PUSCH transmission.

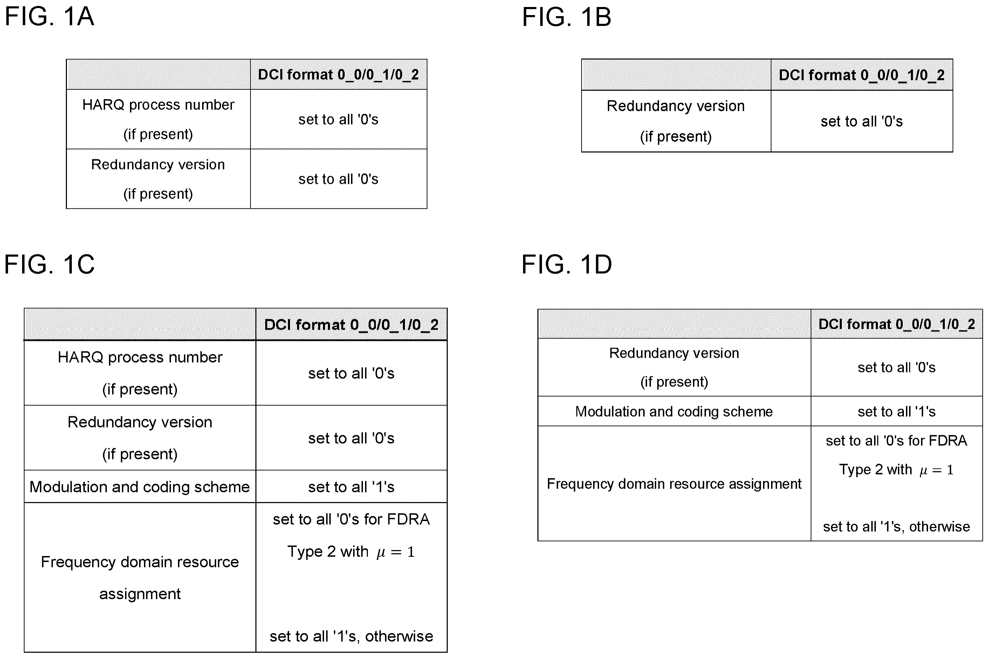

The UE validate whether one or more fields included in the detected DCI have special value(s) to determine whether the DCI is type 2 CG activation/deactivation DCI. Examples of this relationship between one or more fields and the special value(s) are shown in FIGS. 1A to 1D.

FIGS. 1A to 1D are diagrams to show the examples of the special fields for the validation of the type 2 CG activation/deactivation DCI in Rel-17 NR. FIGS. 1A and 1B correspond to the activation DCI, and FIGS. 1C and 1D correspond to the deactivation DCI. FIGS. 1A and 1C correspond to a case where the UE is provided with one CG type 2 configuration in an active bandwidth part (BWP), and FIGS. 1B and 1D correspond to a case where the UE is provided with a plurality of CG type 2 configurations in the active BWP.

FIG. 1A represents that DCI format 0_0/0_1/0_2 may correspond to the activation DCI when a Hybrid Automatic Repeat reQuest (HARQ) process number (HPN) field (if present) is set to all '0', and a redundancy version (RV) field (if present) is set to all '0'.

FIG. 1C represents that DCI format 0_0/0_1/0_2 may correspond to the deactivation DCI when the HPN field (if present) is set to all '0', the RV field (if present) set to all '0', a modulation and coding scheme (MCS) field is set to all '1', and a frequency domain resource assignment field is set to all '0' or '1'.

FIGS. 1B and 1D represent that the HPN field is not used for the validation of the activation/deactivation DCI when the UE is provided with a plurality of CG type 2 configurations. This is because the HPN field is used to indicate which of the plurality of CG type 2 configurations is activated/deactivated.

Note that conditions other than those shown in FIGS. 1A to 1D are also used for the validation of the activation/deactivation DCI. For example, the activation/deactivation DCI has a new data indicator (NDI) field set to '0' for an enabled transport block (TB).

To be more specifically, in Rel. 17, the activation DCI for type 2 CG indicates the MCS, but does not indicate the NDI and the RV having the corresponding field being set to the special values as described above.

The CG parameters described above may be configured for the UE by use of the CG configuration information of a higher layer (for example, a ConfiguredGrantConfig information element of an RRC layer). The CG parameters may include, for example, information specifying the CG resource. The CG parameters may include information related to, for example, a CG index, a time offset, a periodicity, or the like.

Here, each of the periodicity and the time offset may be represented by units such as a symbol, a slot, a subframe, and a frame. The periodicity may be represented by, for example, the certain number of symbols. The time offset may be represented by, for example, an offset of a certain index (slot number = 0 and/or system frame number = 0, or the like) relative to a timing.

Some of the CG parameters may be configured by the CG configuration information and the remains thereof may be configured by PUSCH configuration information (for example, an RRC information element, PUSCH-Config). For example, a maximum rank for the CG PUSCH may be indicated by a parameter provided by the PUSCH configuration information (for example, an RRC parameter maxRank, maxRankDCI-0-2-r16, or the like).

The information generally specified by the DCI for the DG PUSCH is configured by the CG configuration information for the type 1 CG. For example, the UE is notified of information corresponding to a precoding information and number of layers field, a measurement reference signal (Sounding Reference Signal (SRS)) Resource Indicator (SRI) field, an MCS field, and an antenna port field of the DCI by a precodingAndNumberOfLayers field, an srs-ResourceIndicator field, an mcsAndTBS field, and an antennaPort field, respectively, included in the CG configuration information.

For example, the UE may determine a transmitted precoding matrix indicator (TPMI) and the number of layers (transmission rank) for the CG PUSCH based on precodingAndNumberOfLayers.

Repetition transmission may be configured for the CG. When the repetition for the CG is supported, a repetition-related parameter may be configured by the CG configuration information. The repetition-related parameter may include, for example, an RRC parameter repK indicating repetition transmission times of the transport block (TB), an RRC parameter repK-RV indicating an RV sequence used for the repetition transmission, an RRC parameter sequenceOffsetForRV indicating an RV offset for a starting RV for the first repetition toward a second resource set, and the like.

The repetition transmission times described above may be any integer, for example, 1, 2, 4, 8, or the like. When the repetition transmission times is n (> 0), the UE may transmit one TB using n times of transmission occasions. The CG PUSCH with the repetition transmission times more than one may be referred to as a CG PUSCH with repetition.

A single DCI (SDCI) based time division multiplexing (TDM) multi transmission/reception point (MTRP) PUSCH may be configured for the CG. When the SDCI based TDM MTRP PUSCH for the CG is supported, a second TRP (or a second SRS resource set) related parameter may be configured by the CG configuration information. For example, the UE may be notified of information corresponding to a precoding information and number of layers field, and an SRI field for the second SRS resource set of the DCI by a precodingAndNumberOfLayers2 field, and an srs-ResourceIndicator2 field, respectively, included in the CG configuration information.

### [CG PUSCH Retransmission]

Note that although in Rel-15 NR, retransmission is scheduled by the DG for the type 1 CG/type 2 CG PUSCH, and retransmission cannot be performed on the CG PUSCH, in Rel. 16 or later versions, retransmission on the CG PUSCH (retransmission in the CG resource) is supported.

The UE may receive information related to the CG PUSCH retransmission by a specific DCI format (for example, DCI format 0_1) to control retransmission of data/control information on the CG PUSCH based on the received information.

The information related to the retransmission described above may be a downlink feedback information (DFI) flag field.

The DFI flag field may have a bit length of 0 or 1 bit. When the UE is configured to monitor DCI format 0_1 having the CRC scrambled by the CS-RNTI, and performs shared spectrum channel access in a certain cell, the bit length of the DFI flag field may be 1. Otherwise, the bit length of the DFI flag field may be 0.

When the DFI flag field has the bit length of 1 bit, a value of the DFI flag field being 0 may indicate type 2 CG activation/release, and the value of the DFI flag field being 1 may indicate the CG-DFI.

When the CG-DFI is indicated to the UE, the remaining bits constituting DCI format 0_1 may be determined. Specifically, when the CG-DFI is indicated to the UE, the remaining bits constituting DCI format 0_1 may include a HARQ-ACKnowledgement (HARQ-ACK) bitmap field, a transmission power control (TPC) command for scheduled PUSCH field, or the like. The TPC command field may have a bit length of 2 bits.

The HARQ-ACK bitmap field may have a bit length of 16 bits. The most significant bit (MSB) to the least significant bit (LSB) of the HARQ-ACK bitmap may correspond to the HPN in the ascending order. Note that in the present disclosure the MSB and LSB may be replaced to each other. When a value of the HARQ-ACK bitmap field is 1, an ACK may be indicated for the PUSCH/UCI of the corresponding HPN. When the value of the HARQ-ACK bitmap field is 0, a Negative ACK (NACK) may be indicated for the PUSCH/UCI of the corresponding HPN.

The UE may transmit the UCI on the CG PUSCH. The UCI may be referred to as UCI based on the CG or UCI for the CG (CG-UCI). The CG-UCI may be transmitted when a field (cg-RetransmissionTimer-r16) regarding a CG retransmission timer is configured by the CG configuration information.

When the UE receives the CG-DFI before the CG retransmission timer expires, the UE may terminate the TB repetition (retransmission) for the HPN for which the ACK indicated by the HARQ-ACK bitmap field, and may perform retransmission for the HPN for which the NACK is indicated by the HARQ-ACK bitmap field using the CG PUSCH.

When the UE does not receive the CG-DFI before the CG retransmission timer expires, the UE may perform retransmission for the CG PUSCH transmission in the previous CG occasion (initial transmission) in the CG occasion after the CG retransmission timer expires using the CG PUSCH.

The CG-UCI may include a specific field. The specific field may be at least one of the HPN field, the RV field, the NDI field, a channel occupancy time (COT) sharing information field. The specific field indicates information such as the HPN for each CG occasion (for data transmitted on CG PUSCH in the CG occasion).

The HPN field may have a bit length of 4 bits. The RV field may have a bit length of 2 bits. The NDI field may have a bit length of 1 bit.

The COT sharing information field may be configured with a specific higher layer parameter (for example, ULtoDL-CO-SharingED-Threshold-r16) and other higher layer parameters (for example, cg-COT-SharingList-r16), and may have a bit length of Ceil (log2(C)) bits where the number of configuration combinations in relevant other higher layer parameters (for example, cg-COT-SharingList-r16) is C.

The COT sharing information field, when not configured with the specific higher layer parameter (for example, ULtoDL-CO-SharingED-Threshold-r16) and configured with other higher layer parameters (for example, cg-COT-SharingList-r16), may have the bit length of 1 bit. In a case except for the above two cases, the COT sharing information field may have the 0 bit length.

Note that when a field (cg-UCI-Multiplexing-r16) regarding CG-UCI multiplexing is configured by the CG configuration information, the UE may jointly encode the CG-UCI and the HARQ-ACK when the CG PUSCH and the uplink control channel (Physical Uplink Control Channel (PUCCH)) overlap with each other.

The CG PUSCH retransmission control based on the CG-DFI/CG-UCI may be utilized in NR systems using unlicensed spectrum (shared spectrum).

### (Transmission Using More Than Four Antenna Ports)

Rel-15/16 NR supports up to four layers uplink (UL) Multi Input Multi Output (MIMO) transmission. For future radio communication systems, a study is underway to support more than four layers UL transmission in order to realize higher spectra efficiency. For example, for Rel. 18 NR, maximum 6-rank transmission using six antenna port, maximum 6- or 8-rank transmission using eight antenna ports, and the like are under study.

The precoding matrix for the UL transmission using more than four antenna ports (antenna ports the number of which is more than four) is under study. For example, a codebook for eight ports transmission (which may be referred to as 8 transmission UL codebook (8 Transmission (TX) UL codebook) or the like) is under study.

While transmission of one codeword (CW) in one PUSCH is supported in Rel-15/16 NR, a study is underway to transmit more than one CW on one PUSCH by the UE for Rel-18 NR. For example, support of 2 CW transmission for the ranks of 5 to 8, support if 2 CW (dual CW) transmission for the ranks of 2 to 8, or the like is under study. One transport block (TB) corresponds to one CW.

The UE may be notified that the dual CW is supported (or enabled) in a certain higher layer parameter from the base station in the PUSCH transmission. The certain higher layer parameter may be a higher layer parameter (for example, maxNrofCodeWordsScheduledByDCI) regarding the maximum number of CWs scheduled by the DCI. The certain higher layer parameter (for example, maxNrofCodeWordsScheduledByDCI) may be included in the PUSCH configuration information (for example, PUSCH-config).

For example, the certain higher layer parameter setting 2 (for example, maxNrofCodeWordsScheduledByDCI equals 2) may represents that a field for TB #2 is included in the DCI.

The DCI format for PUSCH scheduling (for example, DCI format 0_1/0_2) up to Rel-17 NR includes a field for one CW (for example, MCS field, NDI field, RV field, or the like).

In NR in Rel-18 or later versions, for the dual CW, a study is underway to include a field for two CWs (for example, an MCS field, NDI field, or RV field for a second CW) in the DCI format for PUSCH scheduling.

When the maximum rank (for example, RRC parameter maxRank, maxRankDCI-0-2-r16, or the like) > 4 is configured by the PUSCH configuration information (for example, an RRC information element PUSCH-Config), the rank may be dynamically indicated by the DCI. For example, the value of the rank may be indicated or whether the rank is equal to or smaller than 4 may be indicated by the DCI.

When the rank is equal to or smaller than 4, a field (for example, MCS field, NDI field, RV field) for the CW to be disabled (for example, the second CW) may not be used for an actual indication. When a specific condition is met, one of two CWs may be disabled. The specific condition may be that an MCS index (for example, I_{MCS}) and an RV index (for example, rvid) for the corresponding CW have respective defined values (for example, I_{MCS} = 26 and rvid = 1).

Note that when the maximum rank > 4 is configured, the field for the second CW described above may be included only when the rank > 4 is indicated, and may not be included or be ignored when the rank ≤ 4 is indicated.

The field for the second CW may be indicated using the existing field for the dual CW. For example, one or more (or all) bits of the antenna port field may be used for the indication of at least one of a TRI (rank), the MCS, the RV, and the NDI for the second CW. Note that when the antenna port field has 4 or 5 bits, for example, 1 to 4 bits may be used for the PUSCH transmission with the rank larger than 4.

However, the CG PUSCH for the rank larger than 4 has not been sufficiently studied. For example, problems are whether to support enabling/disabling (or activation/deactivation) of the second CW (or second TB), how to control when supported, how to control the CG-UCI, or the like for the CG PUSCH transmission with the rank larger than 4 (for example, CG PUSCH transmission with rank > 4) by the UE supporting 8 transmission (for example, 8 Tx UE).

Unless the CG PUSCH is appropriately controlled, a communication throughput increase may be suppressed, or a radio resource use efficiency may be decreased.

Therefore, the present inventors came up with the idea of the method for appropriately performing the PUSCH/CG PUSCH transmission with the rank larger than 4.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present, notify, activate, deactivate, indicate (or specify), select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and other messages (for example, positioning (for example, messages from the core network such as NR Positioning Protocol A (NRPPa)/LTE Positioning Protocol (LPP)) message).

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, TPMI and TPMI index may be interchangeably interpreted. In the present disclosure, TX (transmission), port, and antenna port may be interchangeably interpreted. The port/antenna port may mean a port/antenna port for UL (for example, SRS/PUSCH) transmission. In the present disclosure, SRS resource set and resource set may be interchangeably interpreted. Coherent group and SRS resource set may be interchangeably interpreted.

The present disclosure main describes 8 TX, but may be applied to 5 TX, 6 TX, 7 TX, 8 or more TX, 4 or less TX and the like similarly to the case of the 8 TX. In the embodiments below, "8" may be interpreted as "n (n is any integer)", and in this case, the number of layers/the number of ports described on the assumption that the maximum value is "8" can be appropriately interpreted by those skilled in the art assuming that the maximum value is "n". When "8" is interpreted as "n (n is any integer)", for example, "4" for rank may be interpreted as a value obtained", by obtained by rounding off, up, or down the decimal point of n/2.

In the present disclosure, one codeword being applied and the number of layers being equal to or less than 4 may be interchangeably interpreted. Two codewords being applied and the number of layers being more than 4 may be interchangeably interpreted.

In the present disclosure, activating(/deactivating) the CG transmission (CG PUSCH) may be interchangeably interpreted as activating(/deactivating) at least one of a CG configuration, a transmission based on a CG configuration, a transmission using a resource corresponding to a CG configuration, and the like.

In the embodiments below, the maximum rank [configured by the PUSCH configuration information] may be interchangeably interpreted as the maximum number of MIMO layers (for example, an RRC parameter maxMIMO-Layers, maxMIMO-LayersDCI-0-2, or the like) [configured by BWP-common PUSCH configuration information in the serving cell (for example, an RRC information element PUSCH-ServingCellConfig)].

### (Radio Communication Method)

### <First Embodiment>

A first embodiment relates to supporting the CG PUSCH with the rank larger than 4.

The first embodiment can be broadly classified into two as below.
- Embodiment 1.1: the rank larger than 4 is not supported for the CG PUSCH,
- Embodiment 1.2: the rank larger than 4 is supported for the

### CG PUSCH.

In Embodiment 1.1, when the maximum rank (for example, RRC parameter maxRank, maxRankDCI-0-2-r16, or the like) > 4 is configured by the PUSCH configuration information (for example, an RRC information element PUSCH-Config), this maximum rank may not be applied to the CG PUSCH. Additionally, in this case, the maximum rank for the CG PUSCH (for example, an RRC parameter maxRank-cg-r18) (< 4) may be configured.

In Embodiment 1.2, when the maximum rank (for example, RRC parameter maxRank, maxRankDCI-0-2-r16, or the like) > 4 is configured by the PUSCH configuration information (for example, an RRC information element PUSCH-Config), this maximum rank may be also applied to the CG PUSCH (Embodiment 1.2.1). The maximum rank for the CG PUSCH (for example, an RRC parameter maxRank-cg-r18) (≤ 8) may be configured for each piece of CG configuration information (for example, an RRC information element ConfiguredGrantConfig), or configured to be common to plural or all pieces of the CG configuration information (for example, in PUSCH configuration information or uplink BWP configuration information (for example, BWP-UplinkDedicated information element)).

When the maximum rank for the CG PUSCH is configured, the maximum rank describe above configured by the PUSCH configuration information may be referred to as a maximum rank for the DG PUSCH.

In Embodiment 1.2, the UE may determine the rank larger than 4 for the type 1 CG PUSCH precodingAndNumberOfLayers based on included in the CG configuration information. In Embodiment 1.2, the UE may determine the rank larger than 4 for the type 2 CG PUSCH based on the activation DCI (describe later in a second embodiment).

Note that the CG PUSCH according to the first embodiment may be interchangeably interpreted as at least one of CG PUSCH, CG PUSCH with repetition, and SDCI-based MTRP CG PUSCH. Note that different embodiments may be applied to these CG PUSCHs.

According to the first embodiment described above, the UE can appropriately determine the rank for the CG PUSCH. For example, even when the PUSCH/CG PUSCH with the rank larger than 4 is supported, a UE load on a specific CG PUSCH transmission can be expected to decrease by restricting a rank for the specific CG PUSCH to 4 or smaller.

### <Second Embodiment>

A second embodiment relates to a notification of information for the second CW of the CG PUSCH with the rank larger than 4.

When the rank larger than 4 is configured for the CG PUSCH, the field regarding the MCS for the second CW (for example, mcsAndTBS2 field) may be configured by the CG configuration information. Note that, mcsAndTBS defined up to Rel-17 NR may be used for the first CW.

When the rank larger than 4 is configured for the CG PUSCH, the field regarding the RV for the first CW/the second CW may be configured by the CG configuration information. The RV for the first CW and the RV for the second CW (or rvid) may be separately configured by two fields, or both the RV for the first CW and the RV for the second CW (or rvid) may be indicated by one field.

The field regarding the NDI for the first CW/the second CW may not be configured by the CG configuration information. The initial transmission of the CG PUSCH transmits new data, and retransmission thereof is for dynamically scheduling.

The UE may expect that two fields regarding the MCS are configured by the CG configuration information for the rank larger than 4. The UE may also expect that two fields regarding the RV are configured by the CG configuration information for the rank larger than 4.

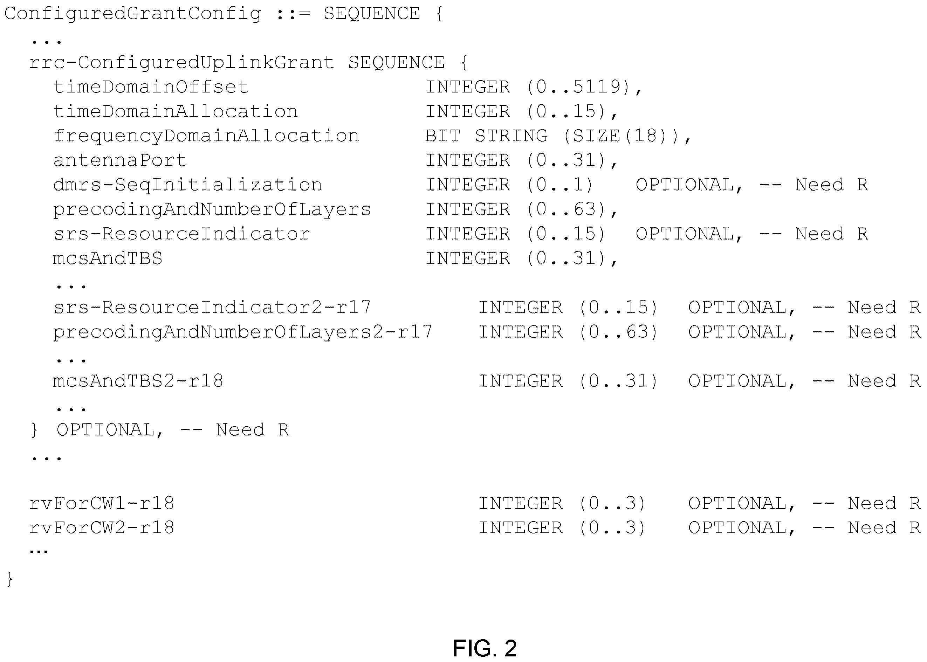

FIG. 2 is a diagram to show an example of the CG configuration information according to the second embodiment. This example is described using Abstract Syntax Notation One (ASN. 1). Note that this is merely an example, and thus an incomplete description is permitted. In this figure, the meanings of RRC information elements/parameters having the same names as RRC information elements/parameters already defined in the specifications of up to Rel-17 NR (for example, 3GPP TS 38.331) are to be naturally understood by those skilled in the art.

Note that in the present disclosure, the names of the RRC information elements, RRC parameters, and the like are not limited to those, and for example, suffixes indicating introduction in a specific release (for example, "_r18", "-r18", and the like) may be added. The suffix may not be added, or another word may be added.

The CG configuration information in FIG. 2 includes mcsAndTBS2 field, and two fields regarding the RV (rvForCW1 field, rvForCW2 field) described above. Note that locations including these fields are not limited thereto. For example, the mcsAndTBS2 field may be included out of rrc-ConfiguredUplinkGrant, and two fields regarding the RV may be included within rrc-ConfiguredUplinkGrant.

When the rank larger than 4 is configured for the CG PUSCH, and in the case of the type 2 CG, the activation/release DCI may follow at least one of (1) to (3) below.
(1) One or two fields regarding the NDI (if present) are set to all '0'.
(2) The activation DCI can specify whether the rank is equal to or smaller than 4 or larger than 4.
(3) In the release DCI, two fields regarding the RV and two fields regarding the MCS are set to special values (for example, two fields regarding the RV are set to all '0', and two fields for the MCS are set to all '1').

For (2) above, whether the rank for the activated CG PUSCH is equal to or smaller than 4 or larger than 4 may be dynamically indicated to the UE based on, for example, at least one of the special value of the field regarding the MCS/RV, the precoding information and number of layers field, the antenna port field, and the like included in the DCI.

For example, when the activation DCI includes the field regarding the MCS/RV having the special value (for example, all '0' to all '1') for one CW of two CWs, the UE may determine that the corresponding CW (relevant one CW) is disabled and the rank is equal to or smaller than 4. In this case, the DCI may indicate the MCS as being enabled for the other CW of two CWs. The field regarding the RV for the other CW may be indicated as being enabled, by the DCI, or may be configured to the special value (for example, all '0' or all '1').

Note that in the present disclosure, "whether the rank is equal to or smaller than 4 or larger than 4" may be interchangeably interpreted as "the value of the rank".

Note that an MCS/RV for a certain CW is indicated as being enabled, by the DCI, may mean that the MCS/RV is indicated by the MCS/the field regarding the RV of the DCI.

When the rank for the activated CG PUSCH being larger than 4 (two CWs are enabled) is indicated by the activation DCI, at least one of items below may be followed.
- two fields regarding the MCS are indicated as being enabled, by the DCI,
- two fields regarding the RV are indicated as being enabled, by the DCI,
- two fields regarding the RV are set to the special values by the DCI (for example, one field regarding the RV is set all '0', the other field regarding the RV is set to all '1').

Note that when the field regarding the RV for a certain CW is set to the special value, the UE may use, as the RV (or rvid) for the CW, a predefined value, a value configured through higher layer signaling, or a value determined based on the UE capability.

Note that the "special value" in the present disclosure may be any bit string including any combination of '0' and '1'.

According to the second embodiment described above, the UE can appropriately determine the information for the second CW of the CG PUSCH with the rank larger than 4.

### <Third Embodiment>

A third embodiment relates to supporting the CG-UCI in the CG PUSCH with the rank larger than 4.

In the third embodiment, the CG-UCI in the CG PUSCH with the rank larger than 4 may not be supported. When the maximum rank (or the rank) configured for the CG PUSCH is larger than 4, or the 2 CW (or 2 CW CG PUSCH) are activated for the CG PUSCH by the DCI, the UE may not expect that the CG retransmission timer is configured.

In the third embodiment, the CG-UCI in the CG PUSCH with the rank larger than 4 may be supported. When the CG retransmission timer is configured, the UE may transmit the CG-UCI in the CG PUSCH with the rank larger than 4.

Note that in third embodiment, the CG retransmission timer for the CG PUSCH with the rank larger than 4 may be configured by a field (cg-RetransmissionTimer-r16) regarding the existing CG retransmission timer included in the CG configuration information, or may be configured by a field (for example, cg-RetransmissionTimer2-r18) regarding another CG retransmission timer included in the CG configuration information. In the latter case, the field regarding the existing CG retransmission timer may be used or retransmission control of the CG PUSCH with the rank equal to or smaller than 4, and the field regarding the other CG retransmission timer may be used for retransmission control of the CG PUSCH with the rank larger than 4.

For the CG PUSCH with the rank larger than 4, the CG-UCI may include at least one of the second RV field for the second CW and the second NDI field for the second CW. For the CG PUSCH with the rank larger than 4, the CG-UCI may include the first MCS field for the first CW/the second MCS field for the second CW.

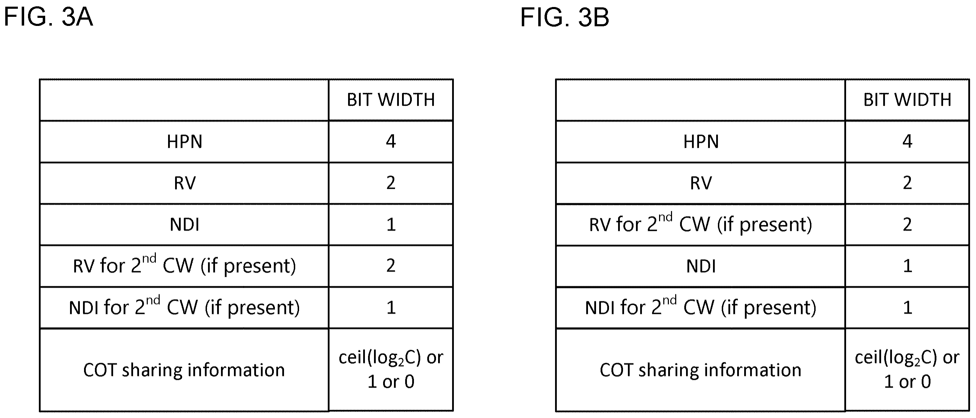

FIGS. 3A and 3B are diagrams to show examples of the CG-UCI according to the third embodiment. The CG-UCI up to Rel-17 NR includes the fields in the order of the HPN, the RV, the NDI, and the COT sharing information. The CG-UCI according to the third embodiment may include the second RV field (if present) after the NDI field and the second NDI field (if present) s shown in FIG. 3A, and may include the second RV field (if present) after the RV field and the second NDI field (if present) after the NDI field as shown in FIG. 3B. Note that an arrangement order of the respective fields is not limited to this.

Note that when the rank larger than 4 is configured for the CG PUSCH through higher layer signaling, the CG-UCI may include information indicating whether the rank is equal to or smaller than 4 or larger than 4. The information may be a new field different from the existing field, or the special value of the existing field. The information indicating whether the rank is equal to or smaller than 4 or larger than 4 may information indicating disabling of one CW (rank ≤ 4).

According to the third embodiment described above, the UE can appropriately determine the transmission of the CG-UCI in the CG PUSCH.

### <Fourth Embodiment>

A fourth embodiment relates to multiplexing the CG-UCI in the (2 CW) CG PUSCH with the rank larger than 4.

In the fourth embodiment, the UE may follow at least one of items below for multiplexing of the CG-UCI in the 2 CW CG PUSCH:
(1) multiplexing the CG-UCI on 1 CW of 2 CW,
(2) multiplexing the CG-UCI on both 2 CW,
(3) whether (1) or (2) above is followed is determined based on the transmitted UCI or CG-UCI,
(4) multiplexing the CG-UCI only when 1 CW is enabled,
(5) repeating the CG-UCI throughout 2 CW.

Note that "multiplex" in the present disclosure may be interchangeably interpreted as "include".

For (1) above, 1 CW on which the CG-UCI is multiplexed may be the first CW, or a CW having higher MCS.

For (2) above, different beta offset parameters may be applied to 2 CW. For example, a beta offset parameter for the CG-UCI in the first CW and a beta offset parameter for the CG-UCI in the second CW may be configured for the UE. For example, the former may be given by the existing betaOffsetCG-UCI-r16, and the latter may be given by a new RRC field.

Note that, the beta offset parameter for the CG-UCI may indicate an index regarding a beta offset when the CG-UCI only is transmitted on the CG PUSCH. Note that when the HARQ-ACK and the CG-UCI are transmitted on the CG PUSCH, the applied beta offset may be a beta offset for the HARQ-ACK.

For (3) above, the "transmitted UCI or CG-UCI" may include at least one of a type of the transmitted information (for example, HARQ-ACK, scheduling request (SR), channel state information (CSI part 1, CSI part 2), a size of the transmitted information (payload size), contents of the transmitted information, a priority of the transmitted information, a resource used for the transmitted information, and the like.

For (4) above, 1 CW being enabled may mean that 1 CW only is enabled by the CG PUSCH activation DCI or that 1 CW is disabled by the deactivation DCI for the CG PUSCH with 2 CW activated.

In the fourth embodiment, the UE may not support that the HARQ-ACK and the CG-UCI are jointly (or simultaneously) transmitted in the 2 CW CG PUSCH. In this case, in accordance with the rule defined in the existing NR describe above, one of the CG PUSCH and the HARQ-ACK may not be transmitted.

Note that in the present disclosure, drop, stop, cancel, puncture, rate match, postpone, not transmit, and the like may be interchangeably interpreted.

In the fourth embodiment, the UE may support that the HARQ-ACK and the CG-UCI are jointly transmitted in the 2 CW CG PUSCH.

For example, when a field regarding the CG-UCI multiplexing is configured by the CG configuration information, the UE may jointly encode the CG-UCI and the HARQ-ACK, and multiplex the jointly encoded information on the CG PUSCH in accordance with at least one of (1) to (5) described above. Otherwise, the UE may not transmit one of the overlapping CG PUSCH and HARQ-ACK may not be transmitted in accordance with the rule defined in the existing NR describe above. Note that the field regarding the CG-UCI multiplexing described above may be the field (cg-UCI-Multiplexing-r16) regarding the existing CG-UCI multiplexing included in the CG configuration information, or a field (for example, cg-UCI-Multiplexing-r18) regarding another CG-UCI multiplexing included in the CG configuration information.

The UE may multiplex the CG-UCI and the HARQ-ACK on different CWs. The correspondence relation between the CG-UCI/HARQ-ACK and the CW may be predefined, configured through higher layer signaling, or determined based on the UE capability. The UE may be notified of a configuration regarding the beta offset to support reporting of different information (CG-UCI/HARQ-ACK) in the different CWs. For example, a beta offset parameter for the case of reporting the different information (CG-UCI/HARQ-ACK) in the different CWs may be configured separately from the beta offset parameter for the CG-UCI described above.

According to the fourth embodiment described above, the UE can appropriately determine the transmission of the CG-UCI in the CG PUSCH.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting a specific processing/operation/control/information for at least one of the embodiments described above,
- supporting 8 TX UL transmission,
- supporting 8 TX CG PUSCH transmission (type 1/2),
- supporting 8 TX CG PUSCH transmission with repetition,
- supporting SDCI based TDM MTRP 8 TX CG PUSCH,
- supporting the ranks (or maximum rank) different between the PUSCH and the CG PUSCH,
- supporting dynamic switching the rank (equal to or smaller than 4 or larger than 4) for type 2 CG,
- supporting the CG-UCI in the CG PUSCH with the rank larger than 4,
- supporting the CG-UCI multiplexing in the 2 CW CG PUSCH,
- supporting the multiplexing of the CG-UCI and the HARQ-ACK in the 2 CW CG PUSCH.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating the 8 TX UL transmission is enabled, information indicating that the 8 TX CG PUSCH transmission (type 1/2) is enabled, any RRC parameter for the specific release (for example, Rel. 18/19), or the like.

When the UE does not support at least one of the specific UE capabilities above or is not configured with the specific information, Rel-15/16 operation may be applied, for example.

### (Supplementary Note)

Regarding one embodiment of the present disclosure, the following supplementary notes of the invention will be given.

### [Supplementary Note 1]

A terminal including:
a receiving section that receives configuration information for a configured grant transmission regarding a rank larger than 4; and
a transmitting section that performs the configured grant transmission, based on the configuration information.

### [Supplementary Note 2]

The terminal according to supplementary note 1, wherein the configuration information includes information indicating a maximum rank for the configured grant transmission other than information different from a maximum rank for a dynamic grant transmission.

### [Supplementary Note 3]

The terminal according to supplementary note 1 or 2, wherein the configuration information includes a field regarding modulation and coding scheme (MCS) for a second codeword or a field regarding a redundancy version (RV) for the second codeword.

### [Supplementary Note 4]

The terminal according to any one of supplementary notes 1 to 3, wherein downlink control information to activate the configured grant transmission includes information indicating whether a rank of the configured grant transmission is equal to or smaller than 4 or larger than 4.

### (Supplementary Note)

Regarding one embodiment of the present disclosure, the following supplementary notes of the invention will be given.

### {Supplementary Note 1}

A terminal including:
a receiving section that receives configuration information for a configured grant transmission regarding a rank larger than 4; and
a control section that controls a transmission of configured grant uplink control information in the configured grant transmission, based on the configuration information.

### [Supplementary Note 2]

The terminal according to supplementary note 1, wherein the configured grant uplink control information includes at least one of a field regarding a redundancy version (RV) for a second codeword and a new data indicator (NDI) field for the second codeword.

### [Supplementary Note 3]

The terminal according to supplementary note 1 or 2, wherein the control section controls multiplexing of the configured grant uplink control information in the configured grant transmission for two codewords.

### [Supplementary Note 4]

The terminal according to any one of supplementary notes 1 to 3, wherein the control section controls multiplexing of the configured grant uplink control information and transmission confirmation information in the configured grant transmission for two codewords.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

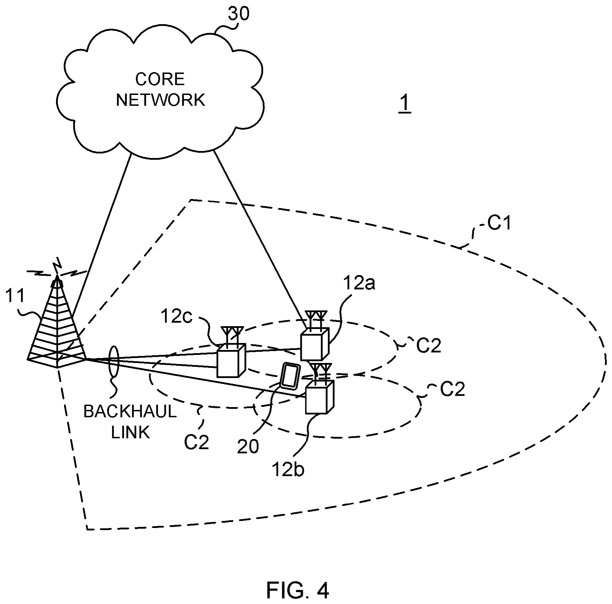

FIG. 4 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band of higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

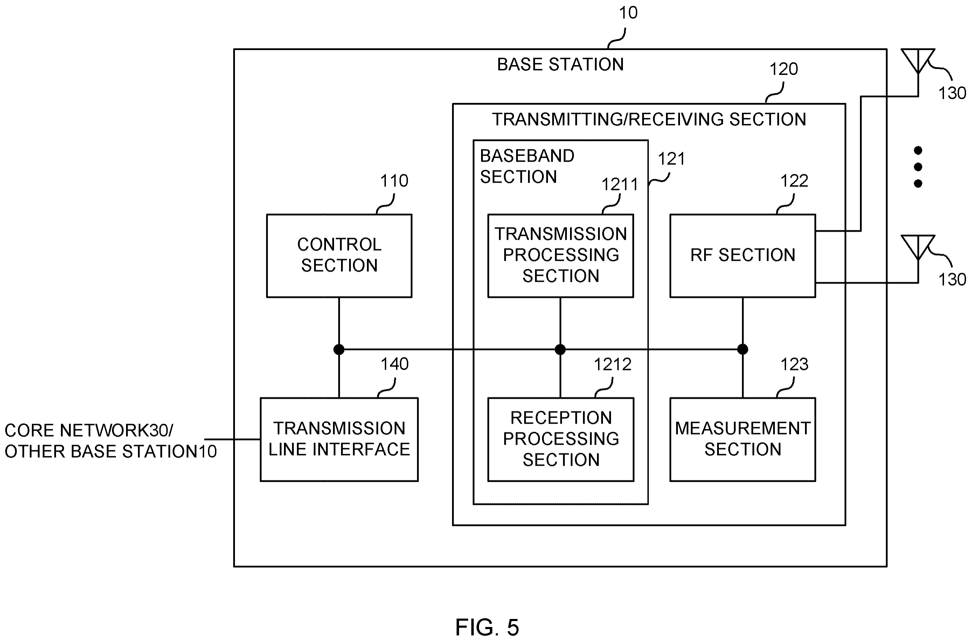

FIG. 5 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that, the transmitting/receiving section 120 may transmit configuration information for a configured grant transmission regarding a rank larger than 4 to the user terminal 20. The transmitting/receiving section 120 may receive the configured grant transmission performed by the user terminal 20 based on the configuration information.

The transmitting/receiving section 120 may transmit the configuration information for the configured grant transmission regarding the rank larger than 4 to the user terminal 20. The transmitting/receiving section 120 may receive the configured grant uplink control information transmitted in the configured grant transmission by the user terminal 20 based on the configuration information.

### (User Terminal)

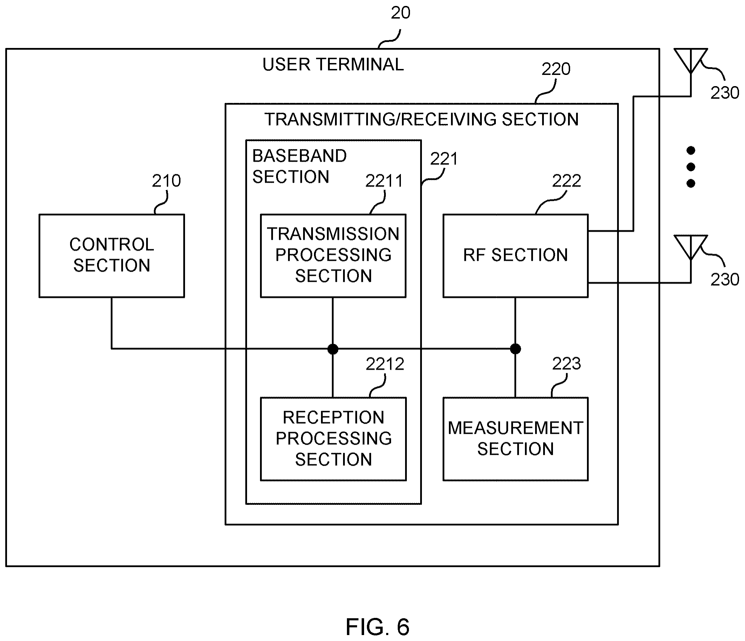

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation based on for a resource for channel measurement. The resource for channel measurement may be, for example, a non zero power (NZP) CSI-RS resource. The measurement section 223 may derive interference measurement for CSI calculation based on a resource for interference measurement. The resource for interference measurement may be at least one of a NZP CSI-RS resource for interference measurement, a CSI-interference measurement (IM) resource, and the like. Note that the CSI-IM may be referred to as a CSI-interference management (IM), or may be interchangeably interpreted as a zero power (ZP) CSI-RS. Note that a CSI-RS, a NZP CSI-RS, a ZP CSI-RS, a CSI-IM, a CSI-SSB, and the like may be interchangeably interpreted in the present disclosure.

Note that the transmitting section and the receiving section of the user terminal 20 in the present disclosure may be constituted with at least one of the transmitting/receiving section 220 and the transmitting/receiving antennas 230.

Note that, the transmitting/receiving section 220 may receive configuration information (for example, CG configuration information) for a configured grant transmission regarding a rank larger than 4. The transmitting/receiving section 220 may perform the configured grant transmission (for example, CG PUSCH transmission) based on the configuration information.

The configuration information may include information indicating a maximum rank for the configured grant transmission (for example, an RRC parameter maxRank-cg-r18) different from information indicating a maximum rank for a dynamic grant transmission (for example, an RRC parameter maxRank, maxRankDCI-0-2-r16, or the like).

The configuration information may include a field regarding modulation and coding scheme (MCS) for a second codeword or a field regarding a redundancy version (RV) for the second codeword.

The downlink control information to activate the configured grant transmission (for example, type 2 CG activation DCI) may include information indicating whether a rank of the configured grant transmission is equal to or smaller than 4 or larger than 4.

The transmitting/receiving section 220 may receive the configuration information (for example, CG configuration information) for the configured grant transmission regarding the rank larger than 4. The control section 210 may control a transmission of configured grant uplink control information (for example, CG-UCI) in the configured grant transmission (for example, CG PUSCH transmission) based on the configuration information.

The configured grant uplink control information may include at least one of a field regarding a redundancy version (RV) for a second codeword and a new data indicator (NDI) field for the second codeword.

The control section 210 may control multiplexing of the configured grant uplink control information in the configured grant transmission for two codewords.

The control section 210 may control multiplexing of the configured grant uplink control information and transmission confirmation information (for example, HARQ-ACK) in the configured grant transmission for two codewords.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

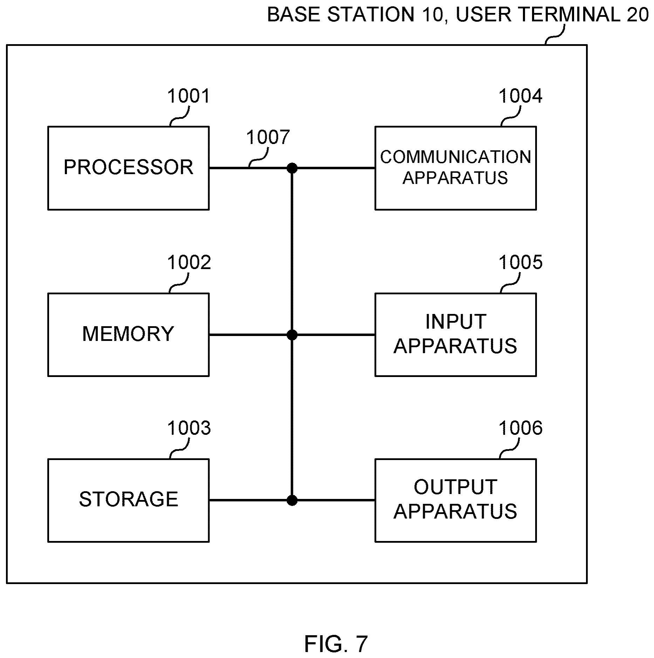

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

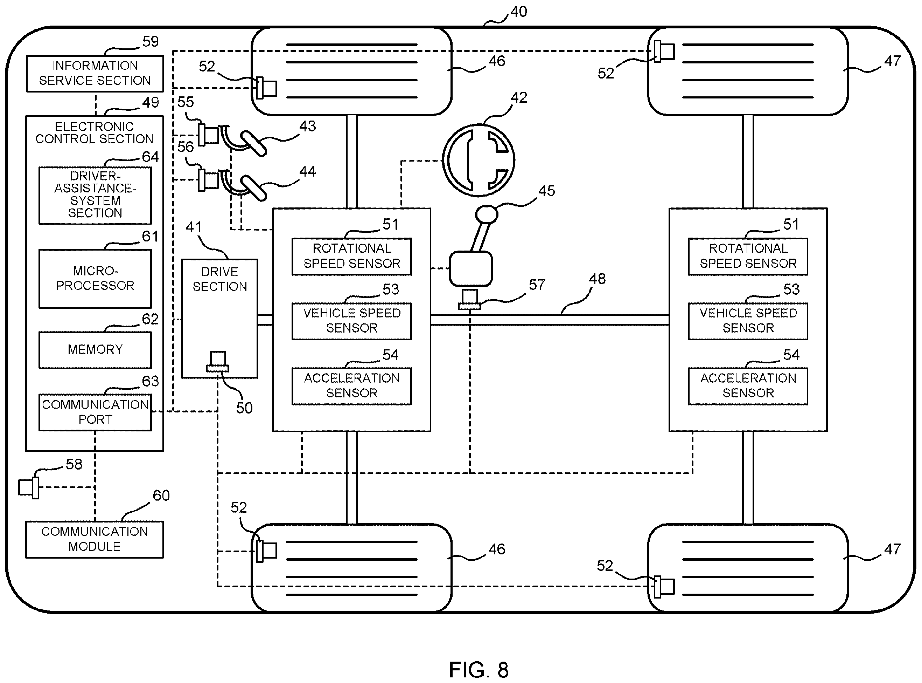

FIG. 8 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-28510, filed on February 27, 2023, the contents of which are incorporated herein by reference in their entirety.

## Claims

1. A terminal comprising:
a receiving section that receives configuration information for a configured grant transmission regarding a rank larger than 4; and
a transmitting section that performs the configured grant transmission, based on the configuration information.

2. The terminal according to claim 1, wherein
the configuration information includes information indicating a maximum rank for the configured grant transmission different from information indicating a maximum rank for a dynamic grant transmission.

3. The terminal according to claim 1, wherein
the configuration information includes a field regarding modulation and coding scheme (MCS) for a second codeword or a field regarding a redundancy version (RV) for the second codeword.

4. The terminal according to claim 1, wherein
downlink control information to activate the configured grant transmission includes information indicating whether a rank of the configured grant transmission is equal to or smaller than 4 or larger than 4.

5. A radio communication method for a terminal, comprising:
receiving configuration information for a configured grant transmission regarding a rank larger than 4; and
performing the configured grant transmission, based on the configuration information.

6. A base station comprising:
a transmitting section that transmits configuration information for a configured grant transmission regarding a rank larger than 4 to a terminal; and
a receiving section that receives the configured grant transmission performed by the terminal, based on the configuration information.
